# FASCICULE DE BREVET EUROPEEN

(11) **EP 3 892 890 B1**
(45) Date de publication et mention de la délivrance du brevet: **31.01.2024**
(21) Numéro de dépôt: 21166080.8
(22) Date de dépôt: 30.03.2021
(51) Int. Cl.: F16H 57/022

(54) **GROUPE MOTOPROPULSEUR COMPORTANT UN SYSTEME D'AIDE A L'ASSEMBLAGE DE DEUX COMPOSANTS**
MOTORANTRIEBSANLAGE, DIE EIN HILFSSYSTEM ZUM ZUSAMMENBAU VON ZWEI KOMPONENTEN UMFASST
POWER TRAIN COMPRISING A SYSTEM FOR ASSISTING WITH THE ASSEMBLY OF TWO COMPONENTS

(30) Priorité: 06.04.2020 FR 2003430
(43) Date de publication de la demande: 13.10.2021
(73) Titulaire: Renault s.a.s, 92100 Boulogne Billancourt (FR)
(72) Inventeur: DUMAS, Eric, 78800 Houilles (FR); MARCHAL, Nicolas, 78330 Le Fleury (FR)
(74) Mandataire: Renault Group

(56) Documents cités:
- EP-A1- 1 538 346
- DE-A1-102013 020 431
- GB-A- 2 219 622

## Description

### Domaine technique de l'invention

L'invention concerne un groupe motopropulseur de véhicule automobile, notamment du type qui comporte une machine électrique et un mécanisme de transmission - tel que par exemple un mécanisme réducteur différentiel - qui sont adjacents et accouplés axialement.

### Arrière-plan technique

Pour réaliser un accouplement des deux composants du groupe motopropulseur, et notamment afin de réaliser un alignement axial satisfaisant, il est connu de centrer - l'un par rapport à l'autre - un premier élément de carter de la machine électrique et un second élément de carter du mécanisme de transmission en utilisant un système d'aide à l'assem blage.

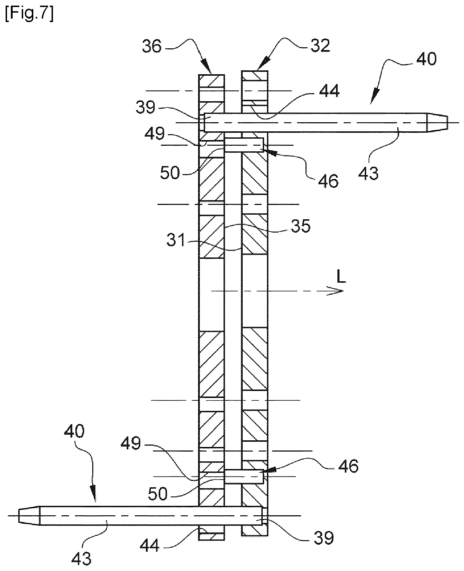

Une telle architecture dite de « centrage par les carters » qui est illustrée à la figure 7 met en oeuvre au moins deux pions axiaux de centrage dont chacun comporte :
- un tronçon de fixation qui est fixé dans un perçage axial de fixation d'un des deux éléments de carter, par exemple de la machine électrique ;
- et un tronçon de centrage qui, selon une course axiale de centrage, permet son centrage dans un perçage axial de centrage de l'autre des deux éléments de carter.

La précision de centrage obtenue à l'aide de tels pions de centrage est de l'ordre du dixième de millimètre afin de garantir l'alignement axial entre par exemple un arbre primaire du mécanisme de transmission et le rotor de la machine électrique.

Afin de faciliter les opérations d'assemblage et de centrage en assurant un pré-centrage préalable des deux éléments de carter, il est connu de faire appel à un système d'aide à l'assemblage comportant au moins une pige de pré-centrage qui comporte un tronçon arrière de montage qui est logé dans un logement axial de montage du premier élément de carter, et un tronçon avant de pré-centrage qui permet le pré-centrage dans un trou axial de pré-centrage du second élément de carter, selon une course axiale de pré-centrage.

La mise en oeuvre des piges de pré-centrage permet d'obtenir un pré-centrage relatif des deux éléments de carter avec une précision de l'ordre du millimètre.

Ainsi, à la fin de la course axiale de pré-centrage par rapprochement axial relatif du premier élément de carter par rapport au second élément de carter, le tronçon de centrage de chaque pion de centrage arrive en principe en étant positionné en face de son perçage axial associé de centrage.

Enfin, après les opérations de centrage et d'assemblage, à l'issue desquelles des faces radiales adjacentes des deux éléments de carter sont jointives, l'accouplement est complété par les opérations de vissage et de serrage des vis de fixation.

A l'issue de la course de pré centrage, notamment du fait des dispersions dimensionnelles d'usinage des logements de montage des piges de pré-centrage, on constate en pratique que les pions de centrage sont désaxés par rapport à leurs perçages axiaux de centrage associés.

Il est alors difficile, voire impossible, de réaliser la course finale de centrage car les extrémités libres des tronçons de centrage viennent en butée contre des portions en vis-à-vis du carter correspondant. Une telle situation est illustrée à la figure 7.

Pour permettre aux pions centrage de pénétrer dans leurs perçages axiaux de centrage respectifs, il est fréquent que les opérateurs donnent des coups de maillet. Toutefois, une telle pratique est absolument à proscrire pour garantir l'intégrité du système, et éviter de mettre des composants en contrainte.

On aboutit ainsi à des situations dans lesquelles le centrage du mécanisme de transmission par rapport à la machine électrique est fortement hyperstatique, et dans lesquelles l'alignement vers lequel tendent les pions de centrage n'est pas le même que celui vers lequel tendent les piges de pré-centrage.

L'invention vise à proposer une solution à ce problème d'assemblage en réduisant l'hyperstatisme de l'assemblage.

### Résumé de l'invention

L'invention propose un groupe motopropulseur de véhicule automobile selon la revendication 1.

Selon d'autres caractéristiques du groupe motopropulseur :
- le premier élément de carter comporte une première couronne périphérique de fixation qui est délimitée axialement par une première face radiale d'accouplement et dans laquelle est formé au moins un logement axial de montage dans lequel est logé le tronçon arrière de montage d'une pige de pré-centrage, et le second élément de carter comporte une seconde couronne périphérique de fixation qui est délimitée axialement par une seconde face radiale d'accouplement adjacente à la première face radiale d'accouplement, et dans laquelle est formé au moins un trou axial de pré-centrage dans lequel est reçu tronçon avant de pré-centrage de ladite pige de pré-centrage ;
- la première couronne périphérique de fixation, la seconde couronne de fixation respectivement, comporte au moins un perçage axial de fixation dans lequel est fixé le tronçon de fixation d'un pion de centrage, et la seconde couronne périphérique de fixation, la première couronne de fixation respectivement, comporte au moins un perçage axial de centrage dans lequel est reçu le tronçon de centrage dudit pion de centrage ;
- en position assemblée de la première couronne de fixation sur la seconde couronne de fixation, la première face radiale d'accouplement et la seconde face radiale d'accouplement sont jointives ;
- le système d'aide à l'assemblage comporte deux piges opposées de pré-centrage dont :
   -- une première pige de pré-centrage dont le tronçon arrière de montage est logé dans un logement axial de montage du premier élément de carter ;
   -- et une seconde pige de pré-centrage dont le tronçon arrière de montage est logé dans un logement axial de montage du second élément de carter ;
- le tronçon intermédiaire de chaque pige de pré-centrage s'étend axialement vers l'avant à partir de son tronçon arrière de montage.

L'invention propose aussi un groupe motopropulseur de véhicule automobile selon l'invention, caractérisé :
- en ce qu'il comporte une machine électrique comportant le premier élément de carter, et un mécanisme de transmission adjacent axialement qui comporte le second élément de carter ;
- et en ce que l'accouplement du premier élément de carter sur le second élément de carter est réalisé au moyen d'un ensemble de vis axiales de fixation du premier élément de carter sur le second élément de carter préalablement assemblés.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] - la figure 1 est une vue schématique en section par un plan axial d'un exemple de réalisation d'un Groupe motopropulseur électrique ;
[Fig.2] - la figure 2 est une vue schématique qui, à sa partie de droite, illustre en section par un plan axial le carter de la machine électrique et le carter du réducteur différentiel accouplés au moyen d'un système d'aide à l'assemblage selon l'invention et qui, à sa partie de gauche, illustre en vue axiale en bout le carter du réacteur de différentiel ;
[Fig.3] - la figure 3 est une vue schématique en section axiale qui illustre les principaux composants du système d'aide à l'assemblage de la figure 2 et sur laquelle les deux carters sont représentés dans une première position axiale correspondant au début de la course axiale de pré-centrage ;
[Fig.4] - la figure 4 est une vue analogue à celle de la figure 3 sur laquelle les deux carters sont représentés dans une deuxième position axiale correspondant à la fin de la course axiale de pré-centrage et au début de la course axiale de centrage ;
[Fig.5] - la figure 5 est une est une vue analogue à celle de la figure 4 sur laquelle les deux carters sont représentés dans leur position axiale d'accouplement correspondant à la fin de la course axiale de centrage, et après leur serrage axial au moyen des vis de fixation ;
[Fig.6] - la figure 6 est une vue à grande échelle de la partie inférieure de la figure 5 ;
[Fig.7] - la figure 7 est une vue analogue à celle de la figure 4 sur laquelle l'assemblage des deux carters est réalisé au moyen d'un système d'aide à l'assemblage selon l'état de la technique.

### Description détaillée de l'invention

### Description du mode de réalisation selon l'invention

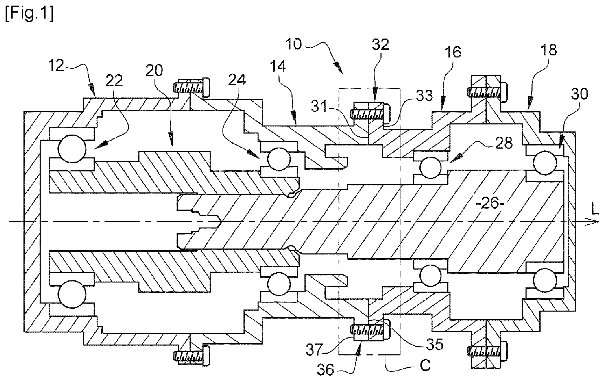

Pour la description de l'invention et la compréhension des revendications, on adoptera à titre non limitatif une orientation axiale selon un axe longitudinal L qui correspond à l'axe central du groupe motopropulseur électrique illustré à la figure 1 et qui est orienté axialement de la gauche vers la droite.

Dans la description qui va suivre, des éléments identiques, similaires ou analogues seront désignés par les mêmes chiffres de référence.

Successivement de gauche à droite, le GMPE 10 représenté à la figure 1 comporte un carter 12 de fermeture du mécanisme de transmission, un carter 14 de réducteur différentiel, un carter 16 de machine électrique, et un autre carter 18 de fermeture de la machine électrique.

Les quatre carters ou éléments de carter 12 à 18 sont alignés axialement et sont fixés deux à deux par des jeux de vis de fixation.

Ici, et à titre non limitatif, les quatre carters logent successivement :
- un arbre primaire creux 20 qui est monté tournant par rapport au carter de fermeture 12 et au carter réducteur de différentiel 14 au moyen de roulements 22 et 24 ;
- et le rotor 26 qui est monté tournant par rapport au carter 16 de machine électrique et au carter 18 de fermeture 18 au moyen de roulements 28 et 30.

Entre les roulements 24 et 28, le carter 14 de réducteur différentiel comporte une couronne interne qui peut porter une bague d'étanchéité (Non représenté) dont les lèvres d'étanchéité coopèrent avec la portée lisse en vis-à-vis de l'arbre du rotor 26. La mise en oeuvre du système d'aide à l'assemblage selon l'invention est mis en oeuvre pour l'assemblage et la fixation du carter de machine électrique 16 (Qui est le premier élément de carter au sens de l'invention) et du carter réducteur de différentiel 14 (Qui est le second élément de carter au sens de l'invention) réalisé dans la zone entourée par le cadre « C ».

A son extrémité axiale de gauche, le carter de machine électrique 16 comporte une couronne périphérique 32 qui est délimitée axialement par deux faces radiales de gauche 31 et de droite 33. A son extrémité axiale de droite, le carter réducteur de différentiel 14 comporte une couronne périphérique 36 qui est délimitée axialement par deux faces radiales de gauche 37 et de droite 35.

Dans la position accouplée des deux carters 14 et 16, les deux faces radiales adjacentes 31 et 35 sont jointives et s'étendent dans un plan radial « P » qui constitue le plan de joint entre les deux carters 16 et 14.

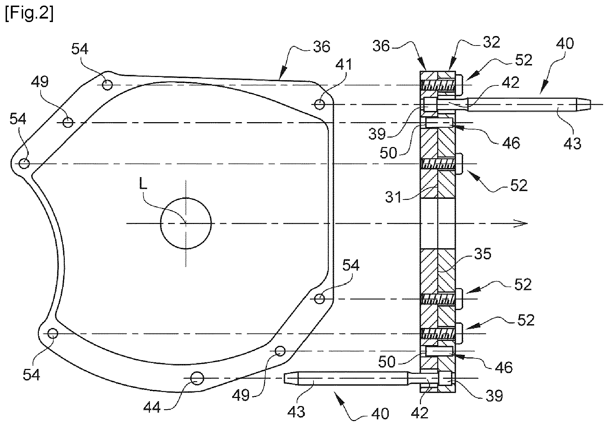

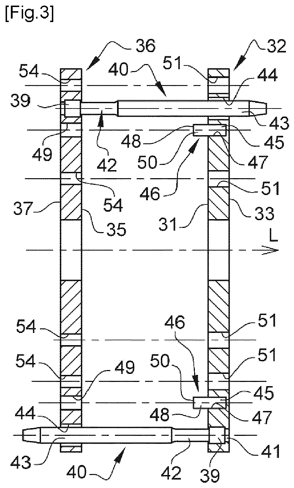

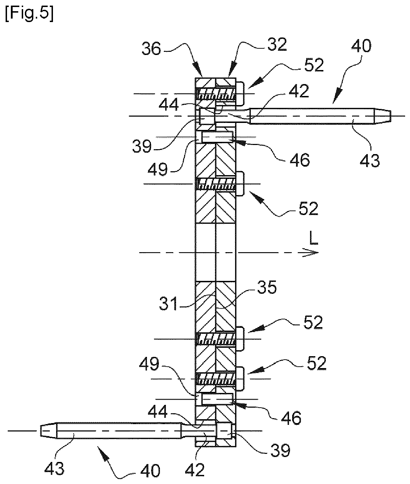

Comme on peut le voir aux figures 2 à 6, les moyens d'assemblage et de fixation des deux couronnes périphériques 32 et 36 comportent ici :
- deux piges axiales rigides 40 de pré-centrage ;
- deux pions axiaux rigides de centrage 46 ;
- et un jeu de quatre vis axiales de fixation 52.

Chaque pige axiale 40 de pré-centrage comporte un tronçon axial arrière de montage 39 qui est logé dans un logement axial de montage 41 associé d'une couronne périphérique, 32, 36. Chaque pige axiale 40 de pré-centrage comporte un tronçon axial avant de pré-centrage 43 qui est reçu en coulissement axial avec jeu radial dans un trou axial de pré-centrage 44 associé d'une couronne périphérique, 32, 36.

Chaque pion axial 46 de centrage comporte un tronçon axial de fixation 45 qui est fixé dans un perçage axial de fixation 47 associé de la couronne périphérique 32.

Chaque pion axial 46 de centrage comporte un tronçon axial de centrage 48 qui est reçu dans un perçage axial de centrage 49 associé de la couronne périphérique 34.

Chaque vis de fixation 52 est reçue axialement à travers un trou 51 de la couronne périphérique 32 et sa tige filetée 53 est vissée dans un trou taraudé 54 de la couronne périphérique 34. Conformément à l'invention, chaque pige axiale 40 de pré-centrage comporte un tronçon axial 42 intermédiaire entre son tronçon arrière de montage 39 et son tronçon avant de pré-centrage 43 dont le diamètre extérieur D42 est inférieur au diamètre extérieur D43 du tronçon avant de centrage 43 et qui, à l'issue de la course axiale de pré-centrage, s'étend axialement à travers le trou axial associé 44 de pré-centrage.

Le tronçon intermédiaire 42 de chaque pige de pré-centrage 40 s'étend axialement vers l'avant à partir du tronçon arrière 39 de montage.

En position montée de chaque pige de pré-centrage 40, son tronçon arrière de montage 39 est logé axialement dans son logement axial de montage 41 associé.

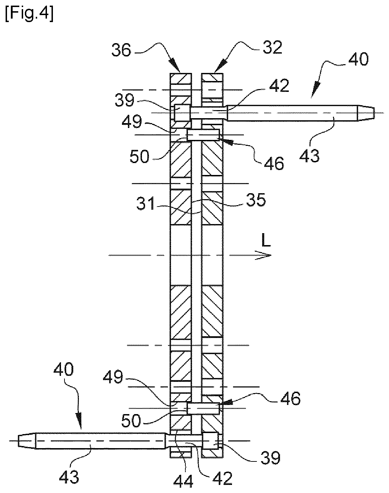

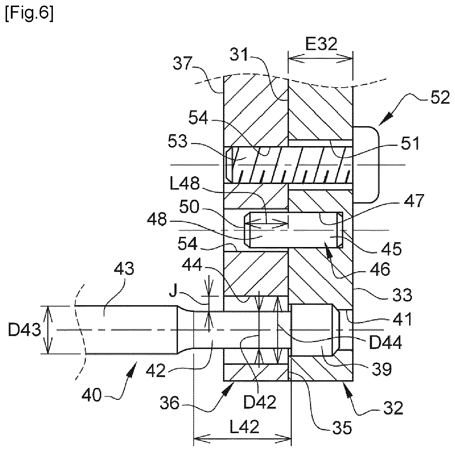

Comme on peut le voir à la figure 4 ainsi qu'en détail à la figure 6, la longueur axiale L42 du tronçon intermédiaire 42 est au moins égale à la somme :
- de l'épaisseur axiale E32 de la couronne périphérique 32 séparant ses deux faces radiales opposées 31 et 33 ;
- et de la longueur L48 du tronçon de centrage de chaque pion de centrage 46 qui s'étend axialement vers l'extérieur depuis la face radiale 31 de la couronne périphérique 32.

Ainsi, comme on peut le voir à la figure 4, lorsque la face d'extrémité libre 50 du tronçon de centrage 48 de chaque pion de centrage 46 arrive au contact de la couronne périphérique 36, c'est une portion du tronçon intermédiaire 42 de chaque pige de pré-centrage 40 qui est reçu dans son trou axial de pré-centrage associé 44, avec jeu radial J sensiblement égal à la moitié de la différence entre le diamètre extérieur D42 du tronçon intermédiaire 42 et le diamètre intérieur D44 du trou axial de pré-centrage associé 44.

Dans cette position de fin de course de pré-centrage, et grâce au jeu radial J, il existe une possibilité de déplacement relatif entre les deux couronnes périphériques 3é et 36, et donc des pions de centrage 46 par rapport aux trous axiaux de centrage 54 en vis-à-vis.

Cette possibilité permet alors de supprimer l'hyperstatisme et de rattraper les défauts d'alignement, et de faire pénétrer chaque tronçon axial de centrage 45 dans son trou axial associé de centrage 54, sans contraintes supplémentaires,

### Description du mode de réalisation selon l'état de la technique

On a représenté à la figure 7 la conception selon l'état de la technique dans laquelle les piges 40 de pré-centrage sont dépourvues d'un tronçon intermédiaire de diamètre réduit, c'est-à-dire que chacune comporte seulement un tronçon axial arrière de montage 39 et un tronçon avant 43 de pré-centrage.

Ainsi, dans la position illustrée à la figure 7 qui correspond à la position illustrée à la figure 4, lorsque la face d'extrémité libre 50 du tronçon de centrage 48 de chaque pion de centrage 46 arrive au contact de la couronne périphérique 36, c'est une portion du tronçon avant de pré-centrage de chaque pige de pré-centrage 40 qui est reçue dans son trou axial de pré centrage associé 44, sans quasiment aucun jeu radial.

Il n'est alors pas possible de rattraper d'éventuels défauts d'alignement tels que mentionnés en préambule.

### Variantes

L'invention n'est pas limitée à l'accouplement d'une machine électrique avec un composant de transmission d'un groupe motopropulseur électrique.

Elle peut notamment être utilisée pour l'accouplement de toute paire d'éléments de carters adjacents dans un groupe motopropulseur, avec ou sans machine électrique.

Le nombre et l'agencement des piges de pré-centrage et des pions de centrage peuvent varier.

Par exemple, les logements 41 de montage des piges de pré-centrage peuvent appartenir à un même élément de carter et, inversement, les trous axiaux de fixation des pions de centrage 46 peuvent appartenir à plusieurs éléments de carter.

En fonction des contraintes de conception et industrielles, les piges 40 de pré-centrage peuvent rester à demeure après accouplement, ou bien être démontées.

## Revendications

1. Groupe motopropulseur de véhicule automobile qui comporte :
- un premier élément de carter (16) ;
- un second élément de carter (14) adjacent au premier élément de carter (16) auquel il est accouplé,
- un système d'aide à l'assemblage du premier élément de carter (16) sur le second élément de carter (14) adjacent qui est réalisé par rapprochement axial relatif du premier élément de carter (16) par rapport au second élément de carter (14),
dans lequel le système d'aide à l'assemblage comporte au moins une pige (40) de pré-centrage qui comporte :
- un tronçon arrière (39) de montage qui est logé dans un logement (41) axial de montage du premier élément de carter (16) ;
- et un tronçon avant (43) de pré-centrage qui permet le pré-centrage dans un trou axial (44) de pré-centrage du second élément de carter (14), selon une course axiale de pré-centrage,
chaque pige (40) de centrage comporte un tronçon intermédiaire (42) dont le diamètre extérieur est inférieur au diamètre extérieur du tronçon avant (43) de pré-centrage et qui, à l'issue de la course axiale de pré-centrage, s'étend axialement à travers le trou axial (44) de pré-centrage,
**caractérisé en ce que** le système d'aide à l'assemblage comporte au moins un pion de centrage qui comporte :
- un tronçon de fixation (45) qui est fixé dans un perçage (47) axial de fixation d'un des deux éléments de carter (16, 14) ;
- et un tronçon de centrage (48) qui permet le centrage dans un perçage (54) axial de centrage de l'autre des deux éléments de carter, selon une course axiale de centrage.

2. Groupe motopropulseur selon la revendication 1 , **caractérisé en ce que** :
- le premier élément de carter (16) comporte une première couronne (32) périphérique de fixation qui est délimitée axialement par une première face radiale (31) d'accouplement et dans laquelle est formé au moins un logement (41) axial de montage dans lequel est logé le tronçon arrière de montage (39) d'une pige (40) de pré-centrage ;
- le second élément de carter (14) comporte une seconde couronne périphérique (36) de fixation qui est délimitée axialement par une seconde face radiale (35) d'accouplement adjacente à la première face radiale (31) d'accouplement, et dans laquelle est formé au moins un trou axial (44) de pré-centrage dans lequel est reçu tronçon avant (43) de pré-centrage de ladite pige (40) de pré-centrage.

3. Groupe motopropulseur selon la revendication précédente , **caractérisé en ce que** :
- la première couronne (32) périphérique de fixation, la seconde couronne (36) de fixation respectivement, comporte au moins un perçage (47) axial de fixation (45) dans lequel est fixé le tronçon de fixation (45) d'un pion (46) de centrage ;
- la seconde couronne périphérique (36) de fixation, la première couronne (32) de fixation respectivement, comporte au moins un perçage (54) axial de centrage dans lequel est reçu le tronçon de centrage (48) dudit pion (46) de centrage.

4. Groupe motopropulseur selon l'une des revendications 2 ou 3, **caractérisé en ce que**, en position assemblée de la première couronne (32) de fixation sur la seconde couronne (36) de fixation, la première face radiale (31) d'accouplement et la seconde face radiale (35) d'accouplement sont jointives.

5. Groupe motopropulseur selon l'une quelconque des revendications précédentes, **caractérisé en ce que** le système d'aide à l'assemblage comporte deux piges opposées (40) de pré-centrage dont :
- une première pige (40) de pré-centrage dont le tronçon arrière de montage (39) est logé dans un logement (41) axial de montage du premier élément de carter (16) ;
- et une seconde pige (40) de pré-centrage dont le tronçon arrière de montage (39) est logé dans un logement (41) axial de montage du second élément de carter (14).

6. Groupe motopropulseur selon l'une quelconque des revendications précédentes, **caractérisé en ce que** le tronçon intermédiaire (42) de chaque pige (40) de pré-centrage s'étend axialement entre le tronçon arrière de montage (39) et le tronçon avant de pré-centrage (39).

7. Groupe motopropulseur de véhicule automobile selon l'une quelconque des revendications précédentes, **caractérisé :**
- **en ce qu'**il comporte une machine électrique comportant le premier élément de carter (16), et un mécanisme de transmission adjacent axialement qui comporte le second élément de carter (14) ;
et **en ce que** l'accouplement du premier élément de carter (16) sur le second élément de carter (14) est réalisé au moyen d'un ensemble de vis axiales (52) de fixation du premier élément de carter (16) sur le second élément de carter (14) préalablement assemblés.

## Patentansprüche

1. Antriebsstrang eines Kraftfahrzeugs, welcher aufweist:
- ein erstes Gehäuseelement (16);
- ein zweites Gehäuseelement (14), das dem ersten Gehäuseelement (16) benachbart ist, an das es gekoppelt ist;
- ein Hilfssystem für den Zusammenbau des ersten Gehäuseelements (16) mit dem benachbarten zweiten Gehäuseelement (14), der durch relative axiale Annäherung des ersten Gehäuseelements (16) an das zweite Gehäuseelement (14) durchgeführt wird;
wobei das Hilfssystem für den Zusammenbau mindestens einen Vorzentrierstab (40) aufweist, welcher aufweist:
- einen hinteren Montageabschnitt (39), welcher in einer axialen Montageaufnahme (41) des ersten Gehäuseelements (16) aufgenommen wird;
- und einen vorderen Vorzentrierabschnitt (43), welcher die Vorzentrierung in einem axialen Vorzentrierloch (44) des zweiten Gehäuseelements (14) entlang eines axialen Vorzentrierweges ermöglicht,
wobei jeder Zentrierstab (40) einen Zwischenabschnitt (42) aufweist, dessen Außendurchmesser kleiner als der Außendurchmesser des vorderen Vorzentrierabschnitts (43) ist und der sich am Ende des axialen Vorzentrierweges axial durch das axiale Vorzentrierloch (44) erstreckt,
**dadurch gekennzeichnet, dass** das Hilfssystem für den Zusammenbau mindestens einen Zentrierstift aufweist, welcher aufweist:
- einen Befestigungsabschnitt (45), welcher in einer axialen Befestigungsbohrung (47) eines der beiden Gehäuseelemente (16, 14) befestigt ist;
- und einen Zentrierabschnitt (48), welcher die Zentrierung in einer axialen Zentrierbohrung (54) des anderen der beiden Gehäuseelemente entlang eines axialen Zentrierweges ermöglicht.

2. riebsstrang nach Anspruch 1, **dadurch gekennzeichnet, dass**:
- das erste Gehäuseelement (16) einen ersten Umfangsbefestigungsring (32) aufweist, der axial von einer ersten radialen Kopplungsfläche (31) begrenzt wird und in dem mindestens eine axiale Montageaufnahme (41) ausgebildet ist, in welcher der hintere Montageabschnitt (39) eines Vorzentrierstabes (40) aufgenommen wird;
- das zweite Gehäuseelement (14) einen zweiten Umfangsbefestigungsring (36) aufweist, der axial von einer der ersten radialen Kopplungsfläche (31) benachbarten zweiten radialen Kopplungsfläche (35) begrenzt wird und in dem mindestens ein axiales Vorzentrierloch (44) ausgebildet ist, in welchem der vordere Vorzentrierabschnitt (43) des Vorzentrierstabes (40) aufgenommen wird.

3. Antriebsstrang nach dem vorhergehenden Anspruch, **dadurch gekennzeichnet, dass**:
- der erste Umfangsbefestigungsring (32) bzw. der zweite Umfangsbefestigungsring (36) mindestens eine axiale Bohrung (47) zur Befestigung (45) aufweist, in welcher der Befestigungsabschnitt (45) eines Zentrierstiftes (46) befestigt wird;
- der zweite Umfangsbefestigungsring (36) bzw. der erste Befestigungsring (32) mindestens eine axiale Zentrierbohrung (54) aufweist, in welcher der Zentrierabschnitt (48) des Zentrierstiftes (46) aufgenommen wird.

4. Antriebsstrang nach einem der Ansprüche 2 oder 3, **dadurch gekennzeichnet, dass** in der am zweiten Befestigungsring (36) montierten Position des ersten Befestigungsringes (32) die erste radiale Kopplungsfläche (31) und die zweite radiale Kopplungsfläche (35) aneinander anliegen.

5. Antriebsstrang nach einem der vorhergehenden Ansprüche, **dadurch gekennzeichnet, dass** das Hilfssystem für den Zusammenbau zwei einander gegenüberliegende Vorzentrierstäbe (40) aufweist, nämlich:
- einen ersten Vorzentrierstab (40), dessen hinterer Montageabschnitt (39) in einer axialen Montageaufnahme (41) des ersten Gehäuseelements (16) aufgenommen wird;
- und einen zweiten Vorzentrierstab (40), dessen hinterer Montageabschnitt (39) in einer axialen Montageaufnahme (41) des zweiten Gehäuseelements (14) aufgenommen wird.

6. Antriebsstrang nach einem der vorhergehenden Ansprüche, **dadurch gekennzeichnet, dass** sich der Zwischenabschnitt (42) jedes Vorzentrierstabes (40) axial zwischen dem hinteren Montageabschnitt (39) und dem vorderen Vorzentrierabschnitt (43) erstreckt.

7. Antriebsstrang eines Kraftfahrzeugs nach einem der vorhergehenden Ansprüche, **gekennzeichnet:**
- **dadurch, dass** er eine das erste Gehäuseelement (16) aufweisende elektrische Maschine und einen axial benachbarten Kraftübertragungsmechanismus, welcher das zweite Gehäuseelement (14) aufweist, aufweist;
und dadurch, dass die Kopplung des ersten Gehäuseelements (16) an das zweite Gehäuseelement (14) mittels eines Satzes von axialen Schrauben (52) zur Befestigung des ersten Gehäuseelements (16) am zweiten Gehäuseelement (14), welche vormontiert wurden, durchgeführt wird.

## Claims

1. Motor vehicle powertrain that has:
- a first casing element (16);
- a second casing element (14) adjacent to the first casing element (16) to which it is coupled,
- a system for assisting with the assembly of the first casing element (16) on the adjacent second casing element (14), which is realized by bringing the first casing element (16) axially closer to the second casing element (14),
wherein the system for assisting with the assembly has at least one pre-centring gauge rod (40) that has:
- a rear, mounting section (39) that is housed in an axial mounting housing (41) of the first casing element (16) ;
- and a front, pre-centring section (43) that allows the pre-centring in an axial pre-centring hole (44) of the second casing element (14), along an axial pre-centring travel,
each centring gauge rod (40) has an intermediate section (42) of which the outer diameter the smaller than the outer diameter of the front, pre-centring section (43) and that, at the end of the axial pre-centring travel, extends axially through the axial pre-centring hole (44), **characterized in that** the system for assisting with the assembly has at least one centring pin that has:
- a fastening section (45) that is fastened in an axial fastening piercing (47) of one of the two casing elements (16, 14);
- and a centring section (48) that allows the centring in an axial centring piercing (54) of the other of the two casing elements, along an axial centring travel.

2. Powertrain according to Claim 1, **characterized in that**:
- the first casing element (16) has a first peripheral fastening ring (32) that is delimited axially by a first radial coupling face (31) and in which is formed at least one axial mounting housing (41) in which is housed the rear, mounting section (39) of a pre-centring gauge rod (40) ;
- the second casing element (14) has a second peripheral fastening ring (36) that is delimited axially by a second radial coupling face (35) adjacent to the first radial coupling face (31), and in which is formed at least one axial pre-centring hole (44) in which is received the front, pre-centring section (43) of said pre-centring gauge rod (40).

3. Powertrain according to the preceding claim, **characterized in that**:
- the first peripheral fastening ring (32), respectively the second fastening ring (36), has at least one axial fastening (45) piercing (47) in which is fastened the fastening section (45) of a centring pin (46) ;
- the second peripheral fastening ring (36), respectively the first fastening ring (32), has at least one axial centring piercing (54) in which is received the centring section (48) of said centring pin (46).

4. Powertrain according to either of Claims 2 and 3, **characterized in that**, in the assembled position of the first fastening ring (32) on the second fastening ring (36), the first radial coupling face (31) and the second radial coupling face (35) are contiguous.

5. Powertrain according to any one of the preceding claims, **characterized in that** the system for assisting with the assembly has two opposite pre-centring gauge rods (40), these being:
- a first pre-centring gauge rod (40) of which the rear, mounting section (39) is housed in an axial mounting housing (41) of the first casing element (16);
- and a second pre-centring gauge rod (40) of which the rear, mounting section (39) is housed in an axial mounting housing (41) of the second casing element (14).

6. Powertrain according to any one of the preceding claims, **characterized in that** the intermediate section (42) of each pre-centring gauge rod (40) extends axially between the rear, mounting section (39) and the front, pre-centring section (39).

7. Motor vehicle powertrain according to any one of the preceding claims, **characterized:**
- **in that** it has an electric machine having the first casing element (16), and an axially adjacent transmission mechanism that has the second casing element (14);
and **in that** the coupling of the first casing element (16) on the second casing element (14) is realized by means of a set of axial screws (52) for fastening the first casing element (16) on the second casing element (14), which casing elements have been assembled beforehand.
